Europäisches Patentamt

European Patent Office

Office européen des brevets

(19)

(11) Numéro de publication: **0 090 324**
**A1**

(12) **DEMANDE DE BREVET EUROPEEN**

(21) Numéro de dépôt: **83102820.4**

(22) Date de dépôt: **22.03.83**

(51) Int. Cl.³: **H 02 K 1/24**

(30) Priorité: **26.03.82 FR 8205163**

(43) Date de publication de la demande: **05.10.83**
**Bulletin 83/40**

(84) Etats contractants désignés: **CH DE FR GB IT LI SE**

(71) Demandeur: **ALSTHOM-ATLANTIQUE Société Anonyme dite:, 38, avenue Kleber, F-75794 Paris Cédex 16 (FR)**

(72) Inventeur: **Olivier, Michel, 30, rue Saint-Exupéry, F-90400 Danjoutin (FR)**

(74) Mandataire: **Weinmiller, Jürgen et al, Zeppelinstrasse 63, D-8000 München 80 (DE)**

(54) **Rotor à jante feuilletée segmentée et poles rapportés pour machine électrique.**

㊼ Le rotor est caractérisé en ce que les clés (L) creusées dans la surface cylindrique extérieure de la jante pour permettre l'accrochage des pôles (P) sont en nombre supérieur à celui nécessaire pour cet accrochage, et se succèdent angulairement de manière régulière sur tout le tour de la jante, cette disposition permettant de substituer au principe connu de chevauchement par pas polaire, ou demi-pas polaire, le principe nouveau de chevauchement par pas d'accrochage, permettant d'obtenir grâce à une grande liberté de choix de ce pas d'accrochage et de la segmentation, une valeur accrue du coefficient de chevauchement se traduisant par une augmentation de la résistance de la jante aux efforts centrifuges.

Rotor à jante feuilletée segmentée et pôles rapportés pour machine électrique

L'invention se rapporte aux rotors de machines synchrones à pôles saillants et a notamment pour objet la réalisation du circuit magnétique rotorique, plus communément appelé "jante", sur lequel sont fixés les pôles inducteurs.

Une solution, économiquement avantageuse et bien connue, consiste à réaliser ces jantes au moyen de "segments" de tôle mince présentant chacun la forme d'un secteur angulaire de couronne plane, et obtenus par découpage à la presse. Ces segments sont empilés et juxtaposés de manière à former une succession axiale de couronnes complètes entourant la partie axiale du rotor. Le nombre et les étendues angulaires des segments (segmentation) d'une couronne sont déterminés en fonction du nombre de pôles et de la corde maximale admissible pour le segment (capacité de découpage, format limite de la tôle brute, pourcentage de chutes). Les segments sont serrés axialement, entre des segments d'extrémités plus épais, au moyen de nombreux goujons. L'opération d'empilage de la jante est réalisée soit chez le constructeur, si les masses et dimensions mises en jeu sont compatibles avec les gabarits de transport, soit sur le site.

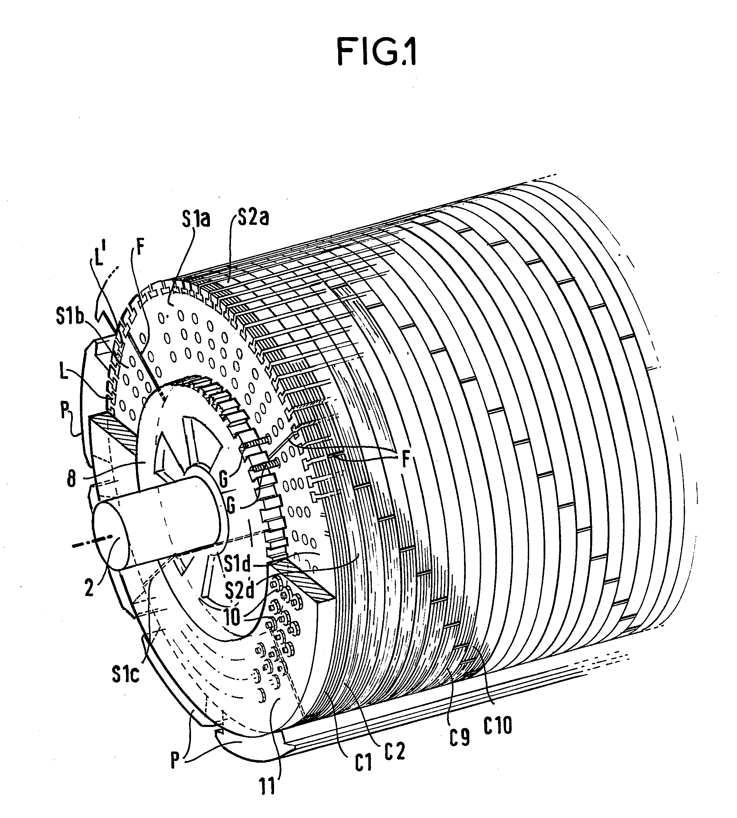

On obtient ainsi une jante constituée par un grand nombre de couches élémentaires, dont l'épaisseur varie généralement entre 2 et 4 mm. Chaque couche élémentaire présente la forme d'une couronne constituée de plusieurs segments s'étendant angulairement chacun sur un nombre entier de pas polaires (voir figure 1).

Les segments constituant ces couches élémentaires, ou des couches composées chacune de plusieurs couches élémentaires groupées, sont systématiquement décalés angulairement d'un ou plusieurs pas polaires, ou moitiés de pas polaire lorsqu'on passe d'une couche à la suivante, ceci pour des raisons de résistance mécaniques expliquées plus loin. Dans la suite du texte, on désignera ce décalage angulaire par le mot chevauchement.

L'accrochage des pôles inducteurs, dans la périphérie extérieure de la jante, est réalisé au moyen de clés en forme de tés, queues d'aronde ou autres profils. Chaque pôle comporte une ou plusieurs clés. Les axes de ces clés sont toujours parallèles à l'axe du pôle.

La jante ainsi réalisée constitue un anneau, dans lequel apparaissent, en rotation, des contraintes dues principalement à l'action simultanée des forces centrifuges apparaissant sur les pôles et sur la jante elle-même. Ces contraintes prennent essentiellement la forme d'une tension dont la direction est principalement tangentielle.

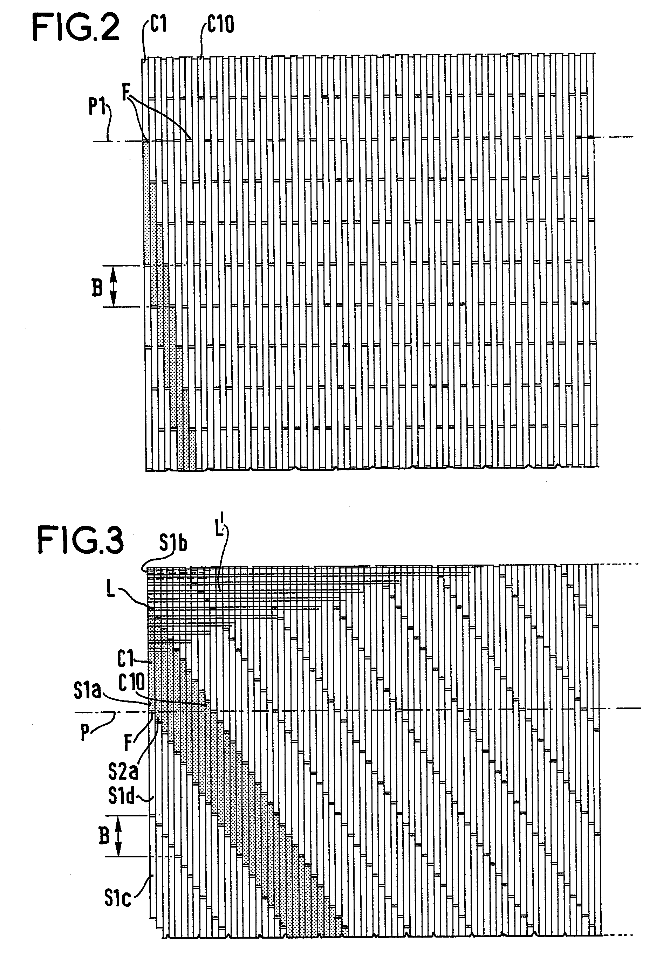

La hauteur radiale de la jante détermine la section de métal supportant la force de tension. Cependant la présence de coupures radiales entre segments dans chaque couronne circulaire empêche localement celle-ci de supporter la force de tension. La résistance de la jante résulte du fait qu'au voisinage de chacune des coupures d'une couronne la force de tension est transmise, partie par frottement et partie par cisaillement des goujons aux couronnes adjacentes qui, grâce au chevauchement, ne présentent pas de coupures au même endroit. On comprend donc que, lorsqu'on veut calculer la force maximale de tension tangentielle que la jante peut supporter, il faut se placer dans un plan passant par l'axe de la jante et par le plus grand nombre possible de fentes. Un tel plan est représenté par la droite P1, par exemple, sur la figure 2 représentant la surface latérale développée d'une jante connue et laissant apparaître les coupures F1. Par rapport au cas d'une jante de mêmes dimensions, mais dépourvue de coupures, la section utile de métal dans ce plan est réduite dans le rapport (p-1)/p, p représentant le rapport de l'étendue angulaire d'un segment à l'angle minimum possible de chevauchement. Dans les jantes connues ce rapport p représente le nombre de pas polaires, ou parfois de demi pas polaires par segment.

Ce rapport (p-1)/p est appelé coefficient de chevauchement (KCH). Habituellement, pour les grandes machines synchrones où ce type de jante est très utilisé, le nombre de pas polaires par segment est de 2, ou 3, ou 4 ou plus rarement 5. Les valeurs correspondantes du coefficient de chevauchement sont respectivement de 0,50, 0,66, 0,75 et 0,80.

On voit ainsi l'influence directe de ce coefficient sur le dimensionnement mécanique d'une jante de ce type, et les limites de faisabilité qui en résultent pour des machines rapides, conduisant au remplacement de ces jantes segmentées par des jantes "massives" dans lesquelles chaque couronne est constituée d'une seule pièce en acier forgé ou moulé.

Ces jantes massives présentent les inconvénients suivants :

- coût plus élevé,

- risques de défauts internes pouvant provoquer des rebuts, donc un allongement des délais de fabrication,

- nécessité de disposer de moyens d'usinage importants,

- dimensions pouvant provoquer des problèmes de transport.

La présente invention a pour but la réalisation d'une jante constituée par des segments de tôle mince, conçue suivant un principe de découpage et d'empilage tel qu'il permette, grâce à l'obtention d'une valeur accrue du coefficient de chevauchement, par exemple égale ou supérieure à 0,90, d'étendre l'utilisation de ce type de jante à un domaine de vitesse jusque là réservé aux jantes massives.

Elle concerne un rotor à jante feuilletée segmentée et pôles rapportés pour machine électrique, la jante occupant sensiblement l'espace compris entre deux cylindres de révolution autour d'un même axe et comprenant un empilage axial de couches planes en forme de couronnes circulaires dont les bords extérieurs forment la surface externe cylindrique de la jante,

- chacune de ces couches étant constituée par plusieurs segments de tôle qui s'étendent chacun sur un secteur angulaire et qui se succèdent angulairement autour de l'axe de manière à constituer une couronne circulaire sensiblement complète, coupée radialement par des coupures entre segments, ces coupures étant décalées angulairement d'une couche à la suivante selon un angle "de chevauchement des segments", variable d'une couche à l'autre, l'ensemble des segments constituant la jante étant rendu solidaire à l'aide de goujons de serrage qui s'étendent parallèlement à l'axe et qui traversent les couches successives de l'empilage pour assurer le serrage axial de ce dernier, de telle sorte que, lorsque chaque couche est soumise à une tension tangentielle résultant de la rotation du rotor et de la force centrifuge, cette tension tangentielle soit transmise, de part et d'autre de chaque coupure d'une couche, des segments de cette couche aux segments des couches adjacentes, soit totalement par les forces de frottement dues aux serrage axial assuré par les goujons, soit dans le cas contraire de façon partielle et complémentaire au frottement par les forces de cisaillement des goujons eux-mêmes,

- des clés d'accrochage prismatiques étant formées en creux dans la surface externe cylindrique de la jante, ceci par découpage des segments de tôle, ces clés s'étendant axialement selon des génératrices de cette surface pour permettre l'accrochage et la fixation des pôles,

- les pôles portant des enroulements électriques, s'étendant axialement en saillie sur la surface externe cylindrique de la jante, se succédant angulairement selon un pas "polaire" autour de la jante et étant accrochés chacun dans plusieurs clés,

- l'angle de chevauchement étant choisi tel que les segments décalés de cet angle dans les couronnes successives soient découpés avec les clés en creux selon un même contour.

Le rotor selon l'invention est caractérisé par le fait que lesdites clés d'accrochage se succèdent angulairement sur tout le tour de la jante selon un pas angulaire "d'accrochage" uniforme de sorte qu'une rotation d'un angle égal à ce pas ou à un multiple de ce pas autour de l'axe du rotor amène le contour de la section de chaque clé en coïncidence avec le contour que la section de la clé suivante occupait avant la rotation,

- le nombre de ces clés étant supérieur à celui nécessaire pour l'accrochage des pôles, certaines seulement de ces clés étant alors utilisées pour l'accrochage des pôles, les autres clés restant inutilisées pour l'accrochage,

- l'angle de chevauchement étant égal à un nombre entier de pas d'accrochage et étant choisi inférieur au pas polaire pour augmenter la résistance de la jante aux efforts tangentiels,

- les goujons de serrage étant choisis pour exercer une force de serrage axiale suffisante pour assurer la transmission de la tension tangentielle d'une couronne aux couronnes adjacentes dans l'étendue de cet angle de chevauchement inférieur au pas polaire.

On adopte de plus de préférence, les dispositions suivantes :

- l'angle de chevauchement est inférieur à la moitié du pas polaire.

- le pas d'accrochage est choisi égal à une fraction de l'angle de chevauchement, de manière à être suffisamment petit pour permettre de changer le nombre de pôles du rotor sans démonter la jante.

- le pas polaire est uniforme sur tout le tour de la jante et le pas d'accrochage est un sous-multiple de ce pas polaire uniforme, de manière à permettre de disposer les axes de tous les pôles avec une même valeur de décalage angulaire par rapport aux clés d'accrochage, avec éventuellement des sens de décalage alternativement opposés en suivant la succession des pôles.

- le pas d'accrochage est un sous-multiple du pas polaire, de manière à permettre de placer l'axe de chaque pôle selon un plan de symétrie de l'ensemble des clés d'accrochage.

Il apparait donc que, selon l'invention, chaque couronne, composée de segments pouvant être d'étendues angulaires égales ou différentes, comporte sur sa périphérie extérieure un grand nombre de clés qui sont toutes aptes à la fixation des pôles, mais dont seulement certaines sont utilisées pour cela.

Ces clés présentent par rapport à celles utilisées jusqu'à présent sur les jantes, les différences de disposition suivantes :

a/ les clés sont réparties de façon équidistante sur toute la périphérie extérieure de la jante, au lieu d'être disposées par groupes symétriques par rapport à chaque axe polaire,

b/ les clés sont toutes disposées radialement et non plus de façon parallèle dans chaque groupe à l'axe polaire correspondant,

c/ le nombre des clés n'est limité que par l'entraxe minimum requis, entre deux clés consécutives, par leur encombrement et la résistance des tôles. Cette particularité autorise une grande liberté de choix de la segmentation. Le nombre de segments constituant la couronne n'est plus obligatoirement un sous-multiple du nombre de pôles,

d/ les pôles fixés à la périphérie de la jante comportent plusieurs clés, disposées de façon symétrique ou non par rapport à l'axe de symétrie propre du pôle. Les pôles peuvent être identiques ou non entre eux, de façon à permettre certaines combinaisons de dispositions angulaires ou de nombre (exemple : modification du nombre de pôles pour machines adaptables rapidement à un changement de fréquences par changement du nombre des pôles - décalage des pôles).

En résumé, il a été trouvé qu'il était possible de multiplier les clés de fixation des pôles, de manière, sous certaines conditions à permettre une grande liberté de choix de la segmentation et à obtenir ainsi, entre autres avantages, une valeur accrue du coefficient de chevauchement (KCH).

A l'aide des figures schématiques ci-jointes, on va décrire ci-après à titre non limitatif un mode de mise en oeuvre de l'invention.

Les éléments qui se correspondent sur plusieurs de ces figures y sont désignés par les mêmes références.

La figure 1 représente une vue en perspective de la jante du rotor d'une machine électrique synchrone selon l'invention.

Les figures 2 et 3 représentent des vues d'une partie de la longueur de la surface extérieure cylindrique de deux jantes, ces surfaces cylindriques étant développées sur un plan, ces jantes étant représentées pour faciliter la compréhension comme si les décalages angulaires des segments des couches successives étaient tous de même sens, ces jantes étant respectivement une jante de type connu (figure 2) et une jante du rotor de la figure 1 (figure 3).

Les figures 4 et 5 représentent respectivement des vues partielles de ces deux jantes en coupe par un plan perpendiculaire à l'axe, les pôles étant représentés sur la figure 5.

La jante représentée sur la figure 1 constitue, avec les 10 pôles P qu'elle est destinée à porter, le circuit magnétique du rotor d'une machine synchrone telle qu'un alternateur d'une puissance de 330 MVA tournant à 600 tours par minute en fonctionnement normal et à 930 tours en cas d'emballement transitoire. Cette jante a une longueur de 3060 mm. Elle tourne autour d'un axe 2. Elle est constituée par un empilage axial de couches planes en forme de couronnes circulaires telles que C1, C2 etc.... constituées de tôles d'acier épaisses de 2,5 mm, avec un diamètre intérieur de 2370 mm et un diamètre extérieur de 3440 mm. Ces couronnes sont centrées sur l'axe 2 par l'intermédiaire d'un croisillon, de manière que la jante soit solidaire de cet axe en rotation. Ce croisillon est représenté d'une manière schématique avec une enveloppe tubulaire continue 8 pour montrer sa fonction mécanique de centrage des couronnes circulaires. Il doit cependant être compris que sa constitution réelle est plus complexe, de manière notamment à permettre le passage radial d'un gaz de refroidissement à travers la jante.

Chacune des couches planes est composée de plusieurs couches élémentaires dont chacune est constituée de 4 segments tels que S1a, S1b, S1c et S1d pour la couche élémentaire C1, et S2a, S2b, S2c et S2d pour la couche élémentaire C2. Tous les segments de toutes les couches élémentaires sont identiques. Deux segments successifs d'une même couche élémentaire sont décalés angulairement de 90° en laissant un intervalle libre entre deux segments successifs d'une même couche. Ces intervalles constituent des passages radiaux, non représentés, pouvant être utilisés pour la circulation radiale d'un gaz de refroidissement, de l'air par exemple. Leur étendue longitudinale, par exemple 10 mm, doit être suffisante pour permettre cette circulation de gaz dans de bonnes conditions, ce qui amène à utiliser des couches composées chacune de 2 à 5 couches élémentaires, sans décalage angulaire des segments à l'intérieur d'une couche composée. Ils constituent les coupures F précédemment mentionnées.

L'ensemble de tous les segments est rendu solidaire, de manière à constituer une jante mécaniquement résistante, à l'aide de 120 goujons G en acier allié à limite élastique d'environ 700 MPa, de la qualité 35 CD4 selon la norme AFNOR A-35557, et de 45 mm de diamètre, qui s'étendent parallèlement à l'axe 2. Ils sont munis à leurs deux extrémités d'écrous tels que 10 grâce auxquels, par l'intermédiaire de plateaux de serrage segmentés 11 partiellement représentés, les couches successives sont serrées les unes contre les autres. La tension de serrage des goujons, par exemple 300 MPa, est suffisante pour que le frottement empêche les segments qui se touchent de glisser angulairement l'un par rapport à l'autre sous l'effet de la tension de la jante, due à la force centrifuge.

Sur les figures 2 et 3 on a supposé, pour faciliter la compréhension du dessin, que les décalages angulaires d'une couche à la suivante étaient toujours de même sens. En fait il est connu, et préférable, d'inverser périodiquement ce sens, de manière que les intervalles entre segments dessinent des chevrons symétriques sur la surface extérieure cylindrique de la jante.

Il apparait que dans la jante connue de la figure 2 dont chaque couronne est constituée de deux segments de deux pôles et d'autant de segments de trois pôles, un plan radial tel que P1 rencontre quatre coupures F dans une pile de dix couches composées successives.

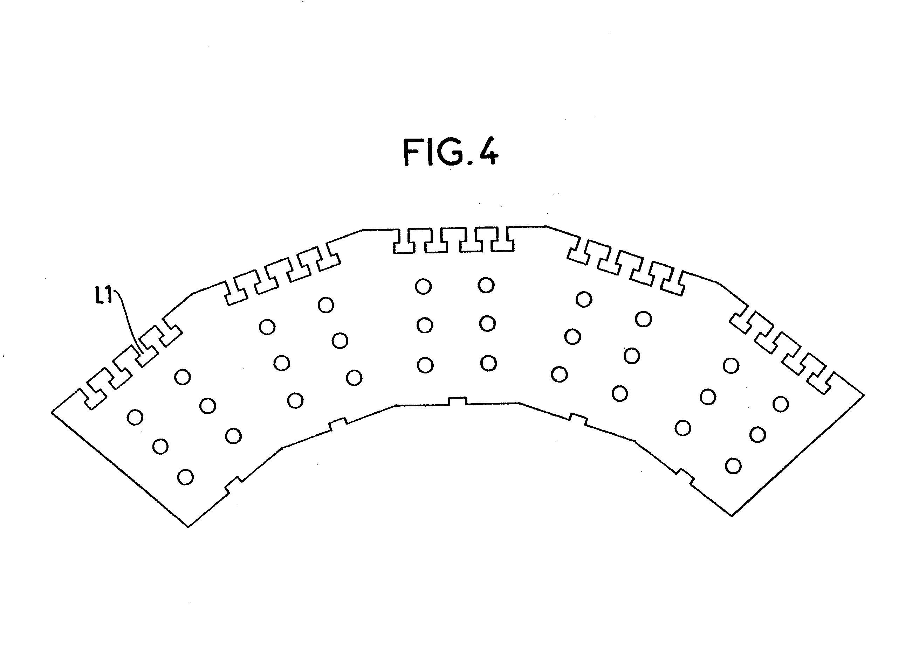

Le coefficient de chevauchement est alors égal à 0,60. Ceci tient au fait que, d'une couche composée à la suivante, l'angle de chevauchement est égal a un pas polaire B, soit 36°, de manière à permettre de fixer chaque pôle de manière symétrique sur un groupe de clés L1 (voir figure 4). Il a été proposé, pour augmenter un tel coefficient de chevauchement trop faible, de fixer chaque pôle de manière dissymétrique sur un groupe de clés, deux pôles successifs avec leurs clés d'accrochage étant alors symétriques par rapport à un plan axial passant entre les deux pôles. Une telle disposition connue, non représentée, peut conduire à un angle de chevauchement égal à un demi-pas polaire, chaque couche élémentaire comportant quatre segments s'étendant chacun sur cinq demi-pas polaires. On arrive alors à un coefficient de chevauchement égal à 0,80 qui conduit, pour résister à la tension, à une masse nette de la jante de 120 tonnes. Cette masse trop élevée entraine une vitesse critique de flexion du rotor trop proche de la vitesse d'emballement transitoire et une telle jante est inutilisable. Les dispositions connues amènent alors à utiliser comme connu une jante non segmentée dont le prix est très élevé.

La figure 3 montre que sur la jante selon l'invention un plan axial tel que P passant par un nombre de coupures aussi grand que possible rencontre seulement une coupure F dans une pile de dix couches composées successives. Ceci est lié aux dispositions suivantes :

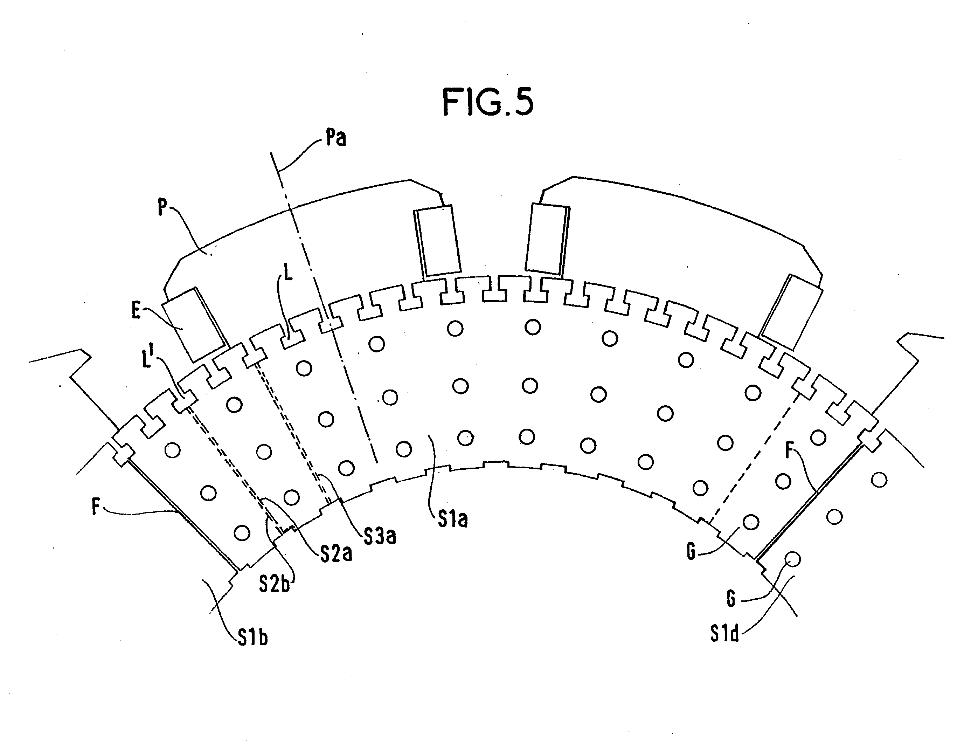

Sur la circonférence il y a 10 x 8 = 80 clés L (voir figure 5) équidistantes à partir desquelles on peut réaliser :

- quatre segments de 20 clés avec un angle de chevauchement de deux clés, c'est-à-dire deux pas d'accrochage ce qui conduit à un coefficient de chevauchement de 0,90. Cet angle de chevauchement est choisi compte tenu de la force de serrage axial économiquement réalisable et des expériences de l'inventeur quant à l'efficacité des forces de frottement qui en résultent.

La masse nette de la jante est alors de 105 tonnes.

Le gain de masse est de 15 t par rapport à la solution précédente, soit 12,5 %. Ce gain outre un intérêt économique évident permet d'obtenir une marge suffisante entre la première vitesse critique de flexion du rotor et la vitesse d'emballement transitoire.

Le domaine d'utilisation des jantes segmentées est limité par le niveau des contraintes mécaniques, dont l'accroissement est proportionnel au carré de la vitesse, et par leur masse propre toujours plus importante que celle d'une jante massive, en raison de l'affaiblissement de leur section résistante due à la segmentation (KCH), et de la présence des goujons.

La jante, objet de la présente invention, grâce à l'augmentation de sa section résistante et à une masse propre plus faible, permet d'atteindre un domaine de vitesses de rotation jusque là réservé aux jantes massives.

## REVENDICATIONS

1/ Rotor à jante feuilletée segmentée et pôles rapportés pour machine électrique, la jante occupant sensiblement l'espace compris entre deux cylindres de révolution autour d'un même axe (2) et comprenant un empilage axial de couches planes (C1, C2...) en forme de couronnes circulaires dont les bords extérieurs forment la surface externe cylindrique de la jante,

- chacune de ces couches (C1) étant constituée par plusieurs segments (S1a, S1b, S1c, S1d) de tôle qui s'étendent chacun sur un secteur angulaire et qui se succèdent angulairement autour de l'axe de manière à constituer une couronne circulaire sensiblement complète, coupée radialement par des coupures (F) entre segments, ces coupures étant décalées angulairement d'une couche (C1) à la suivante (C2) selon un angle "de chevauchement des segments", non forcément constant,

- l'ensemble des segments constituant la jante étant rendu solidaire à l'aide de goujons de serrage (G) qui s'étendent parallèlement à l'axe et qui traversent les couches successives de l'empilage pour assurer le serrage axial de ce dernier, de telle sorte que, lorsque chaque couche est soumise à une tension tangentielle résultant de la rotation du rotor et de la force centrifuge, cette tension tangentielle soit transmise, de part et d'autre de chaque coupure d'une couche, des segments (S1a, S1b) de cette couche aux segments (S2a) des couches adjacentes, soit totalement par les forces de frottement dues au serrage axial assuré par les goujons, soit dans le cas contraire de façon partielle et complémentaire au frottement par les forces de cisaillement des goujons eux-mêmes,

- des clés d'accrochage prismatiques étant formées en creux dans la surface externe cylindrique de la jante, ceci par découpage des segments de tôle, ces clés s'étendant axialement selon des génératrices de cette surface pour permettre l'accrochage et la fixation des pôles (P),

- les pôles (P) portant des enroulements électriques (E), s'étendant axialement en saillie sur la surface externe cylindrique de la jante, se succédant angulairement selon un pas "polaire" autour de la jante, et étant accrochés chacun dans plusieurs clés,

- l'angle de chevauchement étant choisi tel que les segments décalés de cet angle dans les couronnes successives soient découpés avec les clés en creux selon un même contour,

- ce rotor étant caractérisé par le fait que

a/ lesdites clés d'accrochage (L, L') se succèdent angulairement sur tout le tour de la jante selon un pas angulaire "d'accrochage" uniforme de sorte qu'une rotation d'un angle égal à ce pas ou à un multiple de ce pas autour de l'axe du rotor amène le contour de la section de chaque clé en coïncidence avec le contour que la section de la clé suivante occupait avant la rotation,

b/ le nombre de ces clés est supérieur à celui nécessaire pour l'accrochage des pôles (P), certaines seulement (L) de ces clés étant alors utilisées pour l'accrochage des pôles, les autres clés (L') restant inutilisées pour l'accrochage,

c/ l'angle de chevauchement est égal à un nombre entier de pas d'accrochage, et choisi inférieur au pas polaire (B) pour augmenter la résistance de la jante aux efforts tangentiels, et

d/ les goujons de serrage (G) sont choisis pour exercer une force de serrage axiale suffisante pour assurer la transmission de la tension tangentielle d'une couronne aux couronnes adjacentes dans l'étendue de cet angle de chevauchement inférieur au pas polaire.

2/ Rotor selon la revendication 1, caractérisé par le fait que l'angle de chevauchement est inférieur à la moitié du pas polaire.

3/ Rotor selon la revendication 2, caractérisé par le fait que le pas d'accrochage est choisi égal à une fraction de l'angle de chevauchement, de manière a être suffisamment petit pour permettre de changer le nombre de pôles du rotor sans démonter la jante.

4/ Rotor selon la revendication 1, caractérisé par le fait que le pas polaire est uniforme sur tout le tour de la jante et le pas d'accrochage est un sous-multiple de ce pas polaire uniforme, de manière à permettre de disposer les axes de tous les pôles avec une même valeur de décalage angulaire par rapport aux clés d'accrochage, avec éventuellement des sens de décalage alternativement opposés en suivant la succession des pôles.

5/ Rotor selon la revendication 4, caractérisé par le fait que le pas d'accrochage est un sous-multiple du pas polaire (B), de manière à permettre de placer l'axe (Pa) de chaque pôle (P) selon un plan de symétrie de l'ensemble des clés d'accrochage (L, L').

# FIG.1

**FIG.2**

C1  C10

P1

F

B

**FIG.3**

S1b  L'

L

C1

C10

S1a

P

F

S2a

S1d

B

S1c

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A-2 258 037 (SIEMENS)<br>* Page 4, lignes 24-39; page 5, lignes 1-19; page 7, lignes 36-40; figures 1,2 * | 1,3-5 | H 02 K 1/24 |
| Y | US-A-3 488 754 (HOHNSTEIN)<br>* Colonne 2, lignes 58-72; colonne 3, lignes 1-34; figures 3,4 * | 1,2 | |
| A | FR-A-1 368 500 (HITACHI)<br>* Page 2, colonne de gauche, lignes 35-47; figure 2 * | 1 | |

|  |
|---|
| DOMAINES TECHNIQUES RECHERCHES (Int. Cl. ³) |
| H 02 K |

Le présent rapport de recherche a été établi pour toutes les revendications

| Lieu de la recherche | Date d'achèvement de la recherche | Examinateur |
|---|---|---|
| LA HAYE | 29-06-1983 | TIO K.H. |